# EUROPEAN PATENT SPECIFICATION

(11) **EP 2 741 482 B1**
(45) Date of publication and mention of the grant of the patent: **23.06.2021**
(21) Application number: 13192920.0
(22) Date of filing: 14.11.2013
(51) Int. Cl.: H04N 1/00

(54) **Image processing apparatus and control method thereof, and program**
Bildverarbeitungsvorrichtung und Steuerverfahren dafür, und Programm
Appareil de traitement d'images et son procédé de contrôle et programme

(30) Priority: 10.12.2012 JP 2012269783
(43) Date of publication of application: 11.06.2014
(73) Proprietor: CANON KABUSHIKI KAISHA, Ohta-ku Tokyo 146-8501 (JP)
(72) Inventor: NAKASHIMA, Kosuke, Ohta-ku, Tokyo (JP)
(74) Representative: Canon Europe Limited

(56) References cited:
- WO-A1-2011/071053
- WO-A1-2011/155419
- US-A1- 2011 096 348
- US-A1- 2012 005 579
- US-A1- 2012 036 425
- None

## Description

### BACKGROUND OF THE INVENTION

### Field of the Invention

The present invention relates to an image processing apparatus and control method thereof, and a program, and more particularly to an information processing apparatus which is connected to a server via a network and includes a browser that displays an operation screen provided by the server and a control method thereof, and a program.

### Description of the Related Art

As is known, an information processing apparatus such as a PC is connected to a Web server on a network, and a Web browser included in the information processing apparatus displays an operation screen provided by that Web server. In this case, the Web browser of the information processing apparatus requests the Web server to send an operation screen. Then, a Web application on the Web server responds HTML data required to control the Web browser to display the operation screen to the information processing apparatus in response to the request from the information processing apparatus. Thus, the Web browser of the information processing apparatus analyzes the received HTML data, and displays an operation screen based on the description of that HTML data. Furthermore, when the user inputs an instruction via the operation screen displayed on the Web browser, the Web browser notifies the Web server of the input instruction. Then, the Web application of the Web server, which received this notification, executes processing according to the input instruction.

Recently, some of MFPs (Multi Function Peripherals) each including a scanner and printer include the aforementioned Web browser. In such MFP, the operation screen provided from the Web server using the aforementioned sequence is displayed by the Web browser, and various instructions from the user are accepted via that screen.

Furthermore, a technique described in Japanese Patent Laid-Open No. 2006-127503 has been proposed. According to the description of Japanese Patent Laid-Open No. 2006-127503, a Web server provides an operation screen used to input instructions required to use functions included in an MFP. That is, the user of the MFP inputs an instruction to the MFP via the operation screen displayed by the Web browser. Then, the Web browser of the MFP notifies the Web server of the input instruction. The Web server, which received this notification, requests the MFP to execute various kinds of processing according to the contents of the instruction input by the user. Upon reception of this request, the MFP executes the requested processing.

Thus, the MFP need not hold the operation screen including all menu data required to operate the MFP, and the Web server can easily change the operation screen.

Since MFPs have different capabilities of scanners and printers depending on models, a Web application cannot normally operate unless different operation screens are displayed for respective MFPs. For example, when an MFP which reads an original document in only a monochrome mode displays an operation screen including a color read instruction menu, it cannot execute processing according to that operation screen.

In order to solve the aforementioned problem, in a system described in patent literature 1, a Web server has to generate an operation screen including different menu data for each MFP. It is not practical to develop a Web application of the Web server in consideration of capability differences for respective MFPs since the development cost of the Web application increases.

US 2012/0036425 describes a system in which a script is generated at the MFP and is sent to a web application on a web server. The script is used by the web application to generate a custom setting screen

### SUMMARY OF THE INVENTION

The present invention provides a technique in which a Web browser of each information processing apparatus determines a capability of that information processing apparatus and displays a screen by changing screen data even when a server does not provide different screen data for respective information processing apparatuses.

According to the present invention, since the server need not provide different menu data of screens for respective information processing apparatus, man-hours required for development of a Web application in the server can be reduced.

The present invention in its first aspect provides an image processing apparatus as specified in claims 1 to 7.

The present invention in its second aspect provides a control method as specified in claim 8.

The present invention in its third aspect provides a program as specified in claim 9.

Further features of the present invention will become apparent from the following description of exemplary embodiments (with reference to the attached drawings).

### BRIEF DESCRIPTION OF THE DRAWINGS

Fig. 1 is an overall view of an information processing system according to the first embodiment of the present invention;
Fig. 2 is a block diagram showing the hardware arrangement of an MFP according to the first embodiment;
Fig. 3 is a block diagram showing the hardware arrangement of a server according to the first embodiment;
Fig. 4 is a block diagram for explaining the software arrangement of the MFP according to the first embodiment;
Fig. 5 is a block diagram for explaining the software arrangement of the server according to the first embodiment;
Fig. 6 is a view showing a screen transition example when a Web browser of the MFP starts scan processing in the information processing system according to the first embodiment;
Fig. 7 is a chart for explaining the sequence of processing executed by the information processing system according to the first embodiment;
Fig. 8 is a view showing an example of HTML data which expresses a scan setting screen responded by a Web application according to the first embodiment;
Fig. 9 is a view showing an example of a scan capability CSS according to the first embodiment;
Fig. 10 is a view showing an example of an input element CSS according to the first embodiment;
Fig. 11 is a view showing an example of a scan setting screen displayed by the Web browser as a result of the processing of step S714;
Fig. 12 is a view showing a part of an HTTP request which requests to start scan processing in the first embodiment;
Fig. 13 is a view showing an example of a SOAP request sent from the Web application to the MFP in step S718 according to the first embodiment;
Fig. 14 is a flowchart for explaining processing from when the Web browser of the MFP according to the first embodiment receives an HTTP response including the scan setting screen until it loads a scan capability applying JavaScript;
Fig. 15 is a flowchart for explaining processing from when the Web browser of the MFP according to the first embodiment loads the scan capability applying JavaScript until it displays the scan setting screen;
Fig. 16 is a flowchart showing processing executed when the Web browser of the MFP according to the first embodiment sets a value in an input element;
Fig. 17 is a flowchart for explaining processing until the Web browser of the MFP according to the first embodiment sends scan settings to the Web application when a scan start button of the scan setting screen is pressed;
Fig. 18 is a block diagram showing the software arrangement of an MFP according to the second embodiment of the present invention;
Fig. 19 is a chart for explaining the processing sequence executed by an information processing system according to the second embodiment; and
Fig. 20 is a view showing an example of a scan setting screen HTML according to the second embodiment.

### DESCRIPTION OF THE EMBODIMENTS

Embodiments of the present invention will be described in detail hereinafter with reference to the accompanying drawings. Note that the following embodiments do not limit the present invention according to the scope of the claims, and all of combinations of characteristic features described in the embodiments are not always indispensable in the present invention.

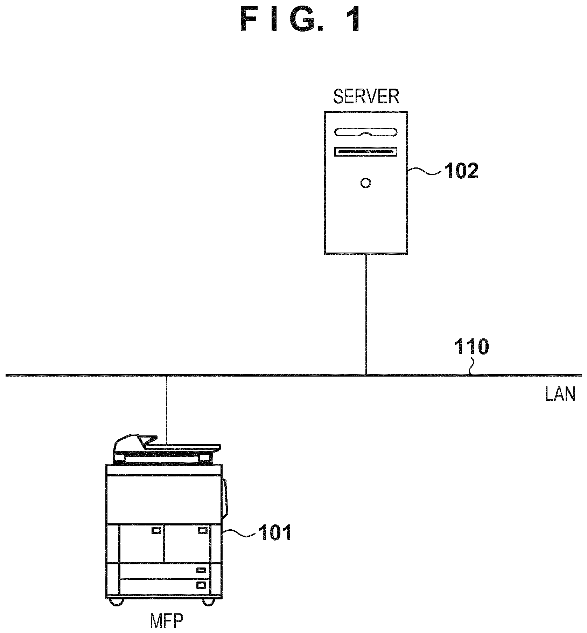

Fig. 1 is an overall view of an information processing system according to the first embodiment of the present invention.

To a LAN 110, an MFP 101 and Web server 102 (to be referred to as a server hereinafter) are connected to be able to communicate with each other. Note that the MFP 101 is a multi function peripheral, and includes a scanner function, copy function, print function, FAX function, box function, and the like.

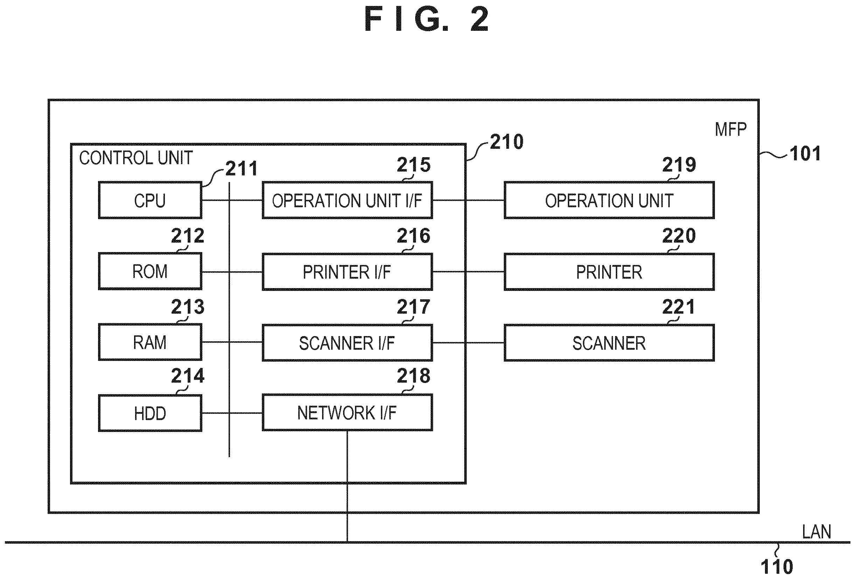

Fig. 2 is a block diagram showing the hardware arrangement of the MFP 101 according to the first embodiment.

A control unit 210 including a CPU 211 controls the overall operations of this MFP 101. The CPU 211 executes various kinds of control such as reading control and sending control by reading out control programs stored in a ROM 212. A RAM 213 is used as temporary storage areas such as a main area and work area of the CPU 211. An HDD 214 stores image data and various programs. An operation unit I/F 215 connects an operation unit 219 and the control unit 210. The operation unit 219 includes a display unit having a touch panel function, a keyboard, and the like. The MFP 101 includes a Web browser function (to be described later), and a Web browser of the MFP 101 analyzes HTML data received from the server 102 and displays an operation screen based on the description of the received HTML data on the display unit of the operation unit 219.

A printer I/F 216 connects a printer 220 and the control unit 210. Image data to be printed by the printer 220 is transferred from the control unit 210 to the printer 220 via the printer I/F 216, and the printer 220 prints the image data on a printing medium (sheet). A scanner I/F 217 connects a scanner 221 and the control unit 210. The scanner 221 reads an image on an original document to generate image data corresponding to the image on that original document, and inputs the image data to the control unit 210 via the scanner I/F 217. A network I/F 218 connects the control unit 210 (MFP 101) to the LAN 110. The network I/F 218 sends image data and various kinds of information to an external apparatus (for example, the server 102) on the LAN 110, and receives various kinds of information from the external apparatus on the LAN 110.

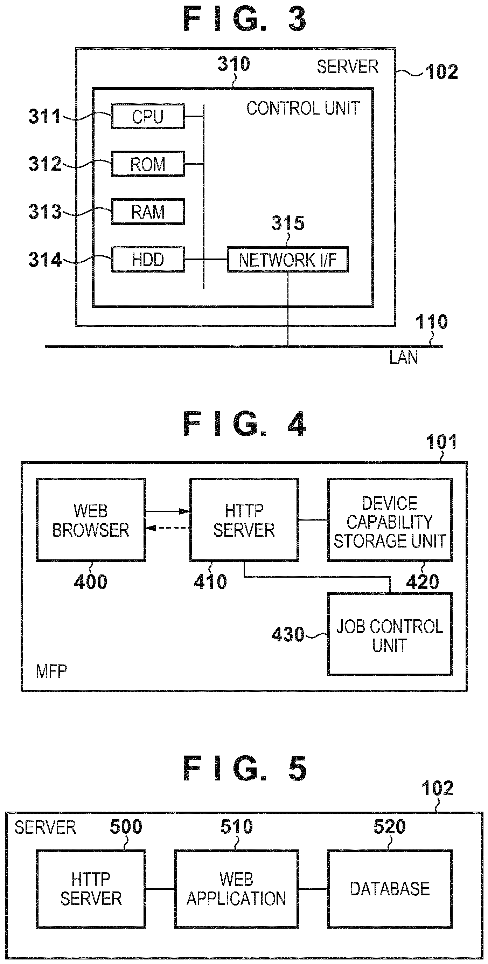

Fig. 3 is a block diagram showing the hardware arrangement of the server 102 according to the first embodiment.

A control unit 310 including a CPU 311 controls the overall operations of this server 102. The CPU 311 executes a boot program stored in a ROM 312 to read out an OS, control programs, and the like installed in an HDD 314, and expands the readout programs on a RAM 313. Then, the CPU 311 executes the programs expanded on the RAM 312 to control the overall operations of this server 102. The RAM 313 is used as temporary storage areas such as a main memory and work area of the CPU 311. The HDD 314 stores image data, various programs, and the like. A network I/F 315 connects the control unit 310 (server 102) to the LAN 110. The network I/F 315 exchanges various kinds of information with another apparatus via the LAN 110.

Fig. 4 is a block diagram for explaining the software arrangement of the MFP 101 according to the first embodiment. Respective function units shown in Fig. 4 are implemented when the CPU 211 included in the MFP 101 executes control programs.

The MFP 101 includes a Web browser 400, HTTP server 410, device capability storage unit 420, and job control unit 430. The Web browser 400 sends a request (to be referred to as an HTTP request hereinafter) according to an HTTP protocol, and receives a response (to be referred to as an HTTP response hereinafter) to that request. Then, the Web browser 400 analyzes the received HTTP response, and displays an operation screen and processes a JavaScript included in the received response. The Web browser 400 can rewrite the operation screen by processing the JavaScript.

The HTTP server 410 receives the HTTP request from the Web browser 400, and assigns the HTTP request to a designated Web service. The Web services published by the HTTP server 410 include the device capability storage unit 420 and job control unit 430.

The device capability storage unit 420 stores device capability information of the MFP 101, which includes a capability of reading processing by the scanner 221, that of printing processing by the printer 230, image data generation capability, and the like. Upon reception of the HTTP request from the Web browser 400, the device capability storage unit 420 sends an HTTP response including a JavaScript, which describes processing for rewriting the operation screen according to the device capability information, to the HTTP server 410.

The job control unit 430 executes a job including reading processing by the scanner 221, print processing by the printer 230, sending processing via the network I/F 218, and the like. Upon reception of a SOAP request from a Web application 510 (Fig. 5; to be described later) of the server 102, the job control unit 430 interprets that SOAP request and executes a job. Then, the job control unit 430 sends a SOAP response including an execution result of the job to the Web application 510 of the server 102.

Note that the first embodiment will explain a job for generating a file by reading an original document and sending the file to the server 102 as an example of a job to be executed by the MFP 101. However, in addition to this job, the present invention is also applicable to, for example, a job for executing printing processing by the printer 220.

Fig. 5 is a block diagram for explaining the software arrangement of the server 102 according to the first embodiment. Respective function units shown in Fig. 5 are implemented when the CPU 311 included in the server 102 executes control programs.

The server 102 includes an HTTP server 500, the Web application 510, and a database 520. Upon reception of an HTTP request from the Web browser 400 of the MFP 101, the HTTP server 500 assigns that HTTP request to the Web application 510 designated by a URL. The Web application 510 generates HTML data to be displayed by the Web browser 400 of the MFP 101 according to the HTTP request from the Web browser 400. Then, the Web application 510 sends the generated HTML data to the Web browser 400 as an HTTP response. Also, the Web application 510 processes a file upload request sent from the job control unit 430 of the MFP 101, and registers the requested data in the database 520.

The basic overview of the system arrangement of the first embodiment has been explained. Subsequently, an overview of processing of the system according to the first embodiment will be described below.

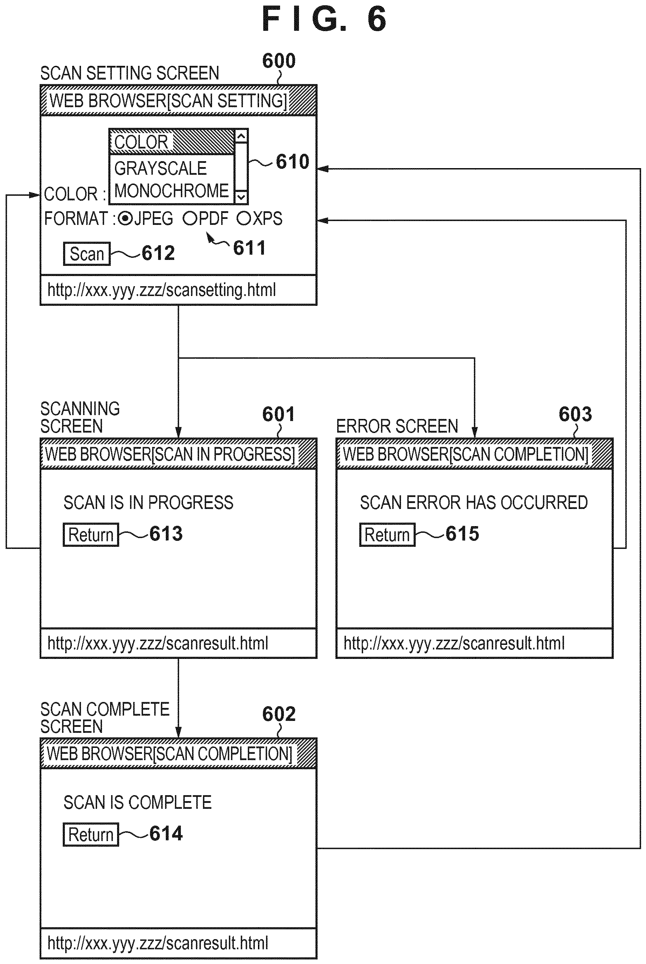

Fig. 6 is a view showing a screen transition example when the Web browser 400 of the MFP 101 starts scan processing in the information processing system according to the first embodiments. Respective screens shown in Fig. 6 are those which are displayed when the Web browser 400 processes HTML data responded by the Web application 510. The respective screens will be described in order below.

A scan setting screen 600 is a screen required to allow the user to input scan settings and to input a scan start instruction. This scan setting screen 600 includes a select box 610 used to select a color to be scanned, radio buttons 611 used to select a format of an image file, and a scan start button 612 used to input a scan start instruction. The select box 610 includes choices "color", "grayscale", and "monochrome". The radio buttons include choices "JPEG, "PDF", and "XPS". When the user presses the scan start button 612 on this setting screen 600, the Web browser 400 transits from the scan setting screen 600 to a scanning screen 601.

The scanning screen 601 is a screen which indicates that scan processing is in progress. The scanning screen 601 includes a return button 613. Upon completion of the scan processing, the Web browser 400 transits to a scan complete screen 602. On the other hand, when the user presses the return button 613 on the scanning screen 601, the Web browser 400 transits from the scanning screen 601 to the scan setting screen 600.

The scan complete screen 602 is a screen indicating scan completion. When the user presses a return button 614 on this scan complete screen 602, the Web browser 400 transits from the scan complete screen 602 to the scan setting screen 600.

An error screen 603 is a screen indicating a scan execution failure. When scan processing is started in response to pressing of the scan start button 612 on the scan setting screen 600, and execution of the scan processing fails, the Web browser 400 transits to the error screen 603. This error screen 603 includes a return button 615 used to transit to the scan setting screen 600.

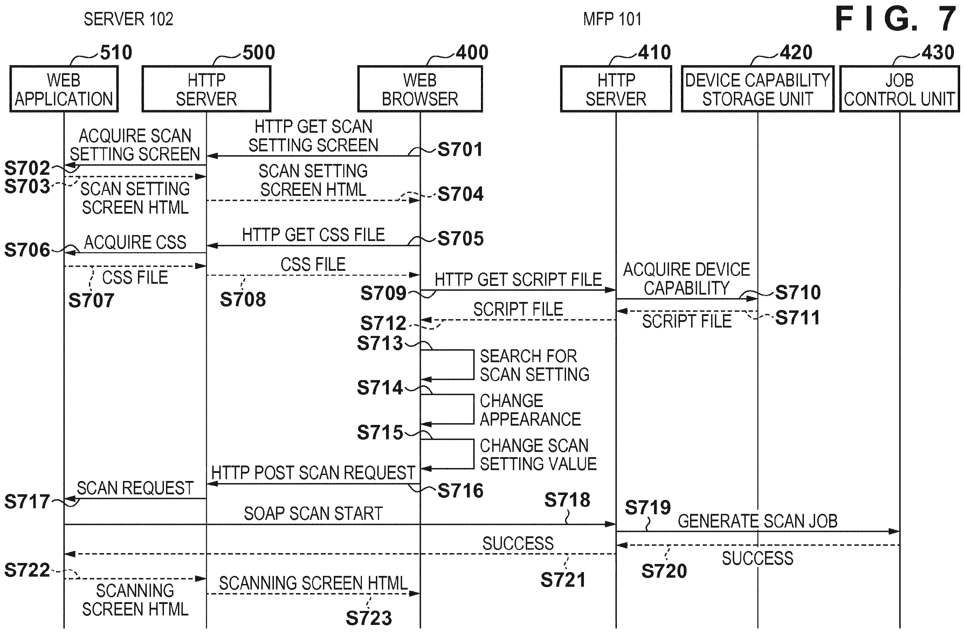

Fig. 7 is a chart for explaining the sequence of processing to be executed by the information processing system according to the first embodiment.

The processing sequence shown in Fig. 7 is started when the user inputs the URL of the scan setting screen 600 to the Web browser 400 to instruct to open a page, and the processing of step S701 is started. In step S701, the Web browser 400 sends an HTTP request as an acquisition request of the scan setting screen 600 to the HTTP server 500 of the server 102. In response to this request, the HTTP server 500 of the server 102 requests the Web application 510 to acquire the scan setting screen 600 in step S702. Then, in step S703, the Web application 510 sends HTML data of the scan setting screen 600 as a response to the HTTP server 500. In step S704, the HTTP server 500 sends an HTTP response (response message) including the HTML data of the scan setting screen 600 to the Web browser 400 of the MFP 101.

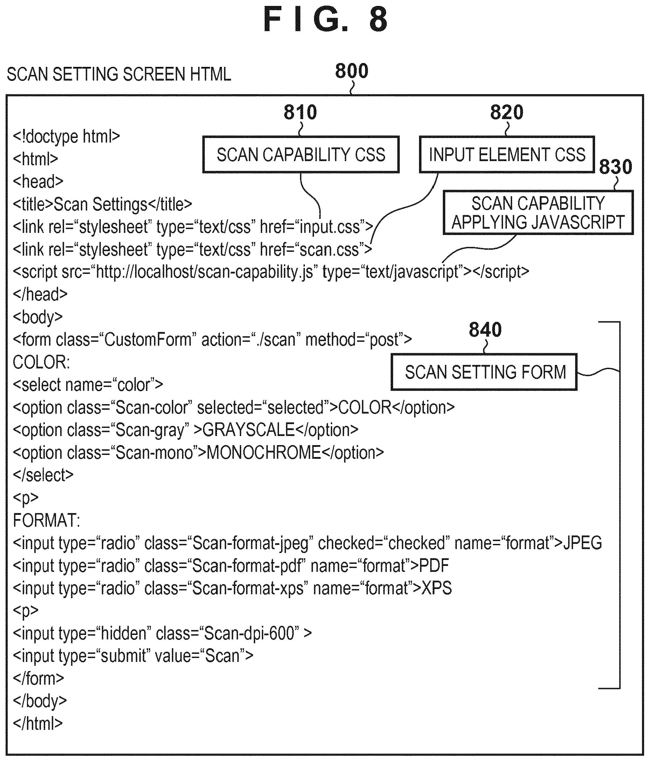

Fig. 8 is a view showing an example of the HTML data (to be referred to as a scan setting screen HTML hereinafter) which expresses the scan setting screen 600 responded by the Web application 510 in the first embodiment.

This scan setting screen HTML 800 includes a scan capability CSS 810, input element CSS 820, and scan capability applying JavaScript 830 in a header part, and a scan setting form 840 in a body part. As shown in Fig. 8, the scan capability CSS 810, input element CSS 820, and scan capability applying JavaScript 830 refer to external files. Therefore, upon reception of the scan setting screen HTML 800, the Web browser 400 acquires the scan capability CSS 810, input element CSS 820, and scan capability applying JavaScript 830 from the server 102.

In step S705, the Web browser 400 sends an HTTP request which requests to acquire the scan capability CSS 810 and input element CSS 820 to the HTTP server 500 of the server 102. Then, in step S706, the HTTP server 500 requests the Web application 510 to acquire the scan capability CSS 810 and input element CSS 820. In response to this request, the Web application 510 responds the scan capability CSS 810 and input element CSS 820 to the HTTP server 500 in step S707. Then, in step S708, the HTTP server 500 sends an HTTP response, which responds the scan capability CSS 810 and input element CSS 820, to the Web browser 400 of the MFP 101.

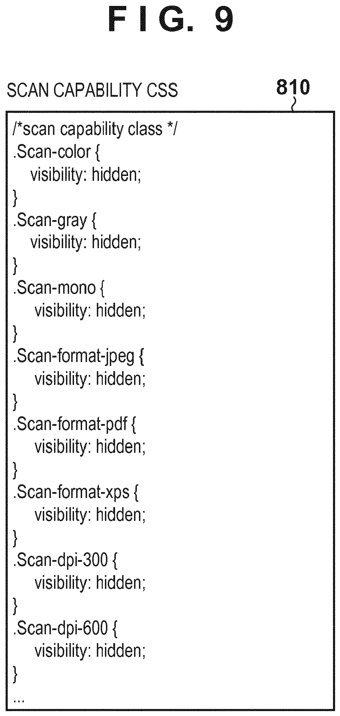

Fig. 9 is a view showing an example of the scan capability CSS 810 according to the first embodiment.

This scan capability CSS 810 defines CSS classes corresponding to scan setting items (capability elements). More specifically, the scan capability CSS 810 includes a "Scan-color" class, "Scan-gray" class, and "Scan-mono" class as scan color settings. Also, the scan capability CSS 810 includes a "Scan-format-jpeg" class, "Scan-format-pdf" class, and "Scan-format-xps" class as file formats to be designated. Furthermore, the scan capability CSS 810 defines a "Scan-dpi-300" class and "Scan-dpi-600" class as scan resolutions. In these scan setting classes, a style (visibility: hidden) is defined to set a hidden state on the screen for each class. Therefore, according to this scan capability CSS 810, all choices of the reading color modes, file formats of read image data, and resolutions are set in a hidden state on the scan setting screen.

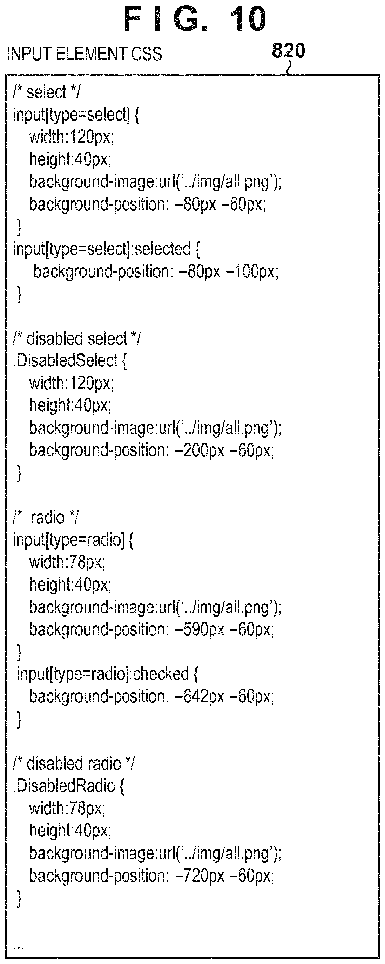

Fig. 10 is a view showing an example of the input element CSS 820 according to the first embodiment.

This input element CSS 820 defines CSS classes (input element classes) corresponding to input elements. More specifically, CSS classes corresponding to the select box and radio buttons are defined. In the respective classes, a style designating an image to be displayed as a choice of the select box or radio button is defined. In Fig. 10, styles representing a selection-enabled state, selected state, and selection-disabled state of the select box and radio buttons are defined.

As shown in Fig. 8, the scan setting form 840 includes the select box used to select a color to be read by the scanner 221 and the radio buttons used to select a format of an image file. For a class attribute of each choice of the select box and radio buttons, a scan capability class is designated. Therefore, as a result of application of the scan capability class shown in Fig. 9 by the Web browser 400, all of the select box and radio buttons are set in a hidden state.

Next, in step S709, the Web browser 400 of the MFP 101 sends an HTTP request, which requests to acquire the scan capability applying JavaScript 830, to the HTTP server 410 of the MFP 101. In step S710, the HTTP server 410 sends an HTTP request, which requests to acquire the scan capability applying JavaScript 830, to the device capability storage unit 420 of the MFP 101. Thus, in step S711, the device capability storage unit 420 generates a JavaScript which describes processing for rewriting the operation screen according to the reading processing capability and image data generation capability of the scanner 221, and responds it to the HTTP server 410. In step S712, the HTTP server 410 sends an HTTP response including the JavaScript responded by the device capability storage unit 420 to the Web browser 400 of the MFP 101. In this manner, upon reception of the JavaScript, the Web browser 400 interprets that JavaScript to execute processes of steps S713 and S714 to be described below.

In step S713, the Web browser 400 of the MFP 101 searches the scan setting screen 600 for elements set with scan capability classes. Then, in step S714, the Web browser 400 changes appearances of elements designated by the scan capability classes according to the definitions in the input element classes.

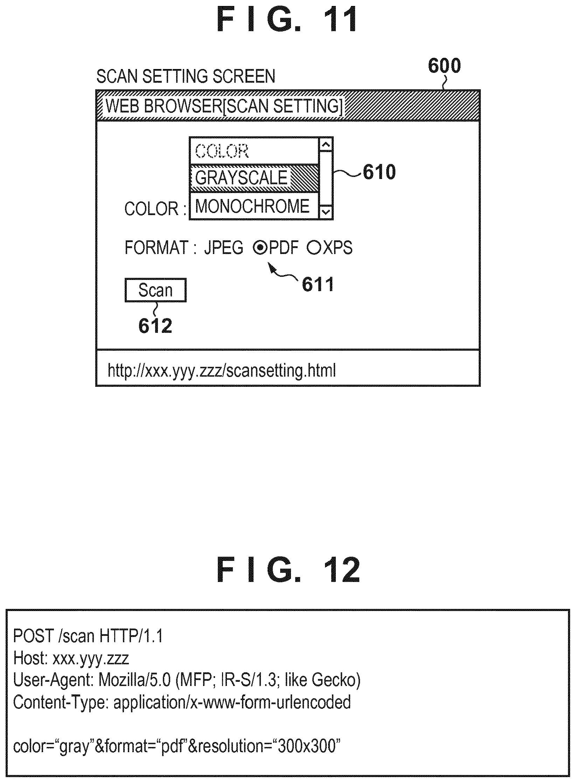

Fig. 11 is a view showing an example of the scan setting screen 600 displayed by the Web browser 400 as a result of the processing of step S714.

On the scan setting screen 600 shown in Fig. 11, of the choices of the select box 610, "color" is displayed in a selection-disabled state. Also, of the choices of the radio buttons 611, "JPEG" is displayed in a selection-disabled state. In this manner, according to the reading processing capability and image data generation capability by the scanner 221, whether or not to allow input of each input element on the scan setting screen 600 is changed.

Subsequently, when the user presses the scan start button 612 on the scan setting screen 600, the Web browser 400 starts processing of step S715.

In step S715, the Web browser 400 sets values of the elements set with the scan capability classes. In case of the scan setting screen 600 shown in Fig. 11, the Web browser 400 sets "gray" in a value attribute of an option element designated with the "Scan-gray" class. Furthermore, the Web browser 400 sets "pdf" in a value attribute of an input element designated with the "Scan-format-pdf" class and "300 × 300" in a value attribute of an input element designated with the "Scan-dpi-600" class.

In step S716, the Web browser 400 sends an HTTP request, which requests to start scan processing, to the HTTP server 500 of the server 102.

Fig. 12 is a view partially showing the HTTP request which requests to start scan processing in the first embodiment.

In case of Fig. 12, the request represents that scan processing is to be started by designating "gray" as a reading color, "pdf" as a format of an image file to be generated, and "300 × 300" as a reading resolution.

In step S717, the HTTP server 500 of the server 102 requests the Web application 510 to start scan processing. In this manner, in step S718, the Web application 510 sends a SOAP request as a scan start instruction to the HTTP server 410 of the MFP 101.

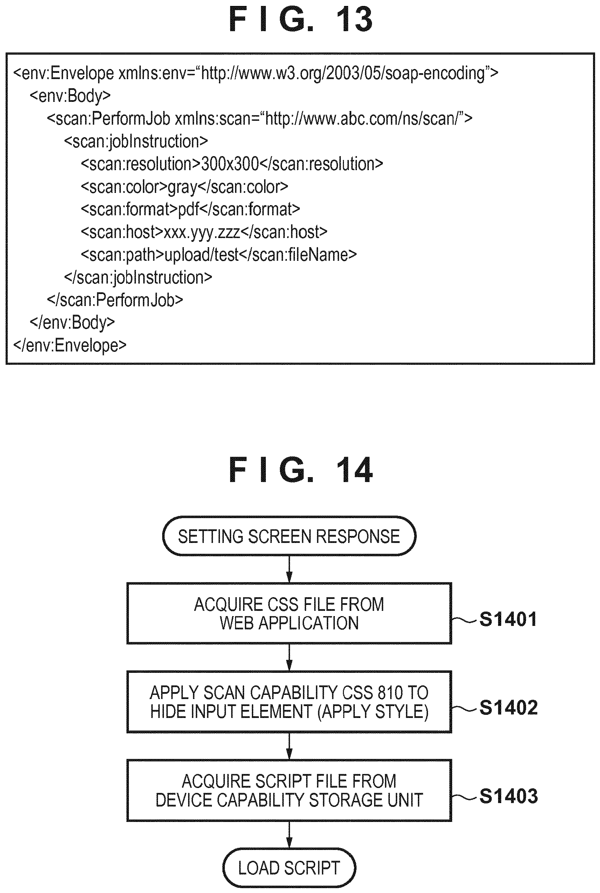

Fig. 13 is a view showing an example of the SOAP request sent from the Web application 510 to the MFP 101 in step S718 according to the first embodiment.

More specifically, this SOAP request instructs to convert a scanned original document into a PDF file, and to send the PDF file to the Web application 510. A resolution of 300 × 300 and a grayscale mode are set as scan settings, a PDF format is set as a document setting, and a host name "xxx.yyy.zzz" and path name "upload/test" are designated as sending settings.

In step S719, the HTTP server 410 of the MFP 101 requests the job control unit 430 to generate a scan job. In this way, the job control unit 430 interprets the SOAP requests and generates a scan job. In step S720, the job control unit 430 responds a SOAP response which represents a success of generation of image data by the job to the HTTP server 410. In step S721, the HTTP server 410 of the MFP 101 sends the SOAP response which represents the success of generation of image data by the job to the Web application 510. In step S722, the Web application 510 responds the scanning screen 601 to the HTTP server 500. In this manner, in step S723, the HTTP server 500 sends an HTTP response which responds HTML data required to display the scanning screen 601 to the Web browser 400 of the MFP 101.

With the aforementioned sequence, HTML data as a basis of the scan setting screen to be displayed by the MFP 101 is acquired from the server 102, and that MFP 101 can change and display the setting screen according to its capability. In this manner, the server need only possess standard menu data of that setting screen, and each MFP can change the setting screen according to its capability.

The sequence of the processing by the Web browser 400 of the MFP 101 according to the first embodiment will be described below with reference to the flowcharts shown in Figs. 14 to 17. Note that control programs required to execute processes shown in the flowcharts of Figs. 14 to 17 are stored in the ROM 212, and are executed by the CPU 211.

Fig. 14 is a flowchart for explaining processing executed from when the Web browser 400 of the MFP 101 according to the first embodiment receives the HTTP response including the scan setting screen 600 until it loads the scan capability applying JavaScript 830.

This processing is started when the Web browser 400 receives the HTTP response including the scan setting screen 600 from the HTTP server 500. In step S1401, the Web browser 400 interprets the scan setting screen HTML 800 to acquire the scan capability CSS 810 and input element CSS 820 from the Web application 510 (steps S705 to S708 in Fig. 7).

The process advances to step S1402, and the Web browser 400 applies the scan capability CSS 810 acquired in step S1401. More specifically, the Web browser 400 applies the scan setting classes defined in the scan capability CSS 810 to the select box and radio buttons in the scan setting form 840. As a result, the appearances of the select box and radio buttons in the scan setting form 840 are set in a hidden state.

Then, the process advances to step S1403, and the Web browser 400 interprets the scan setting screen HTML 800 to acquire the scan capability applying JavaScript 830 from the device capability storage unit 420 (steps S709 to S712 in Fig. 7).

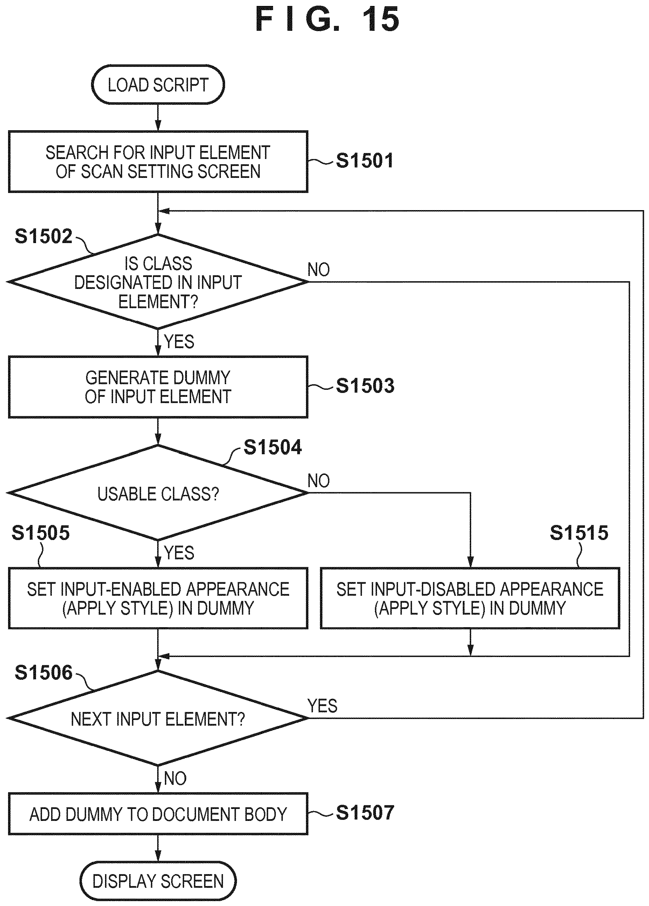

Fig. 15 is a flowchart for explaining processing executed when the Web browser 400 of the MFP 101 according to the first embodiment loads the scan capability applying JavaScript 830 until it displays the scan setting screen 600.

This processing is started when the Web browser 400 loads the scan capability applying JavaScript 830 in step S1403 of Fig. 14. In step S1501, the Web browser 400 searches the scan setting screen 600 for input elements. More specifically, the Web browser 400 searches for input elements and select elements. Next, the process advances to step S1502, and the Web browser 400 determines whether or not a scan capability class is set for an input element of interest found in step S1501. In case of the scan setting screen HTML 800 shown in Fig. 8, input elements set with "Scan-color", "Scan-gray", and "Scan-mono" as colors of class attributes are found. Also, input elements set with "Scan-format-jpeg", "Scan-format-pdf", and "Scan-format-xps" as formats are found. Furthermore, an input element set with "Scan-dpi-600" as a resolution is found, and scan capability classes are set for these input elements.

If the Web browser 400 determines in step S1502 that the scan capability class is set for the input element, the process advances to step S1503; otherwise, the process jumps to step S1506. In step S1503, the Web browser 400 generates a dummy of that input element, and the process advances to step S1504. The Web browser 400 determines in step S1504 whether or not that input element is a usable scan setting. For example, in case of the scan setting screen HTML 800 shown in Fig. 8, the Web browser 400 determines that a choice of the select box designated with the "Scan-color" class is unusable. On the other hand, the Web browser 400 determines that a choice of the select box designated with the "Scan-mono" class is usable.

If the Web browser 400 determines in step S1504 that the input element is usable, the process advances to step S1505; otherwise, the process advances to step S1515. In step S1505, the Web browser 400 applies a style which is defined in the input element CSS 820 and represents an input-enabled appearance to the dummy generated in step S1503.

In case of the input element CSS 820 shown in Fig. 10, for example, a property of an attribute selector "input[type=select]" is applied to the usable choice of the select box. As a result of the processing of step S1505, the dummy becomes an element which represents the selection-enabled choice of the select box. On the other hand, in step S1515, the Web browser 400 applies a style which is defined in the input element CSS 820 and represents an input-disabled appearance to the dummy generated in step S1503.

In case of the input element CSS 820 shown in Fig. 10, for example, a property of a class selector "disabled select" is applied to the unusable choice of the select box. As a result of the processing in step S1515, the input element of the dummy becomes an element which represents the selection-disabled choice of the select box.

After execution of step S1505 or S1515, the process advances to step S1506, and the Web browser 400 determines whether or not the scan setting screen 600 includes the next input element. If the Web browser 400 determines that the next input element is included, the process returns to step S1502; otherwise, the process advances to step S1507. In step S1507, the Web browser 400 adds the dummy input elements to which the styles are applied in step S1505 or S1515 to a document body of the scan setting screen 600.

As a result, as shown in Fig. 11, the select box 610 used to select a reading color, and the radio buttons 611 used to select a file format are displayed in the scan setting screen 600. At this time, since the selection-enabled or selection-disabled style is applied in step S1505 or S1515, for example, "color" of the choices of the reading color is displayed in a selection-disabled state, and "grayscale" and "monochrome" are displayed in a selection-enabled state. Also, in the file format, "JPEG" is displayed in a selection-disabled state, and "PDF" is displayed while being selected.

As described above, according to the first embodiment, the Web browser 400 of the MFP 101 can determine the capability of the MFP 101 and can change the menu data even when the server 102 does not provide menu data of a setting screen for each MFP 101. For this reason, man-hours required for development of the Web application can be reduced.

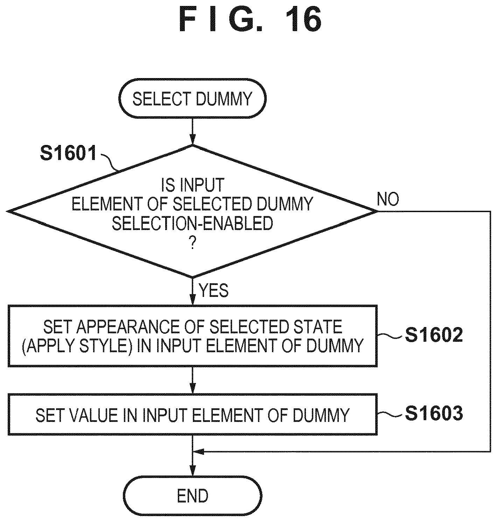

Fig. 16 is a flowchart showing processing for setting a value in an input element by the Web browser 400 of the MFP 101 according to the first embodiment. This processing is started when the dummy in the scan setting screen 600 is selected. More specifically, the Web browser 400 starts processing when the select box or radio button in the scan setting screen 600 is selected. The Web browser 400 determines in step S1601 whether or not the selected input element is a selection-enabled element.

In case of the scan setting screen 600 shown in Fig. 11, "grayscale" and "monochrome of the choices of the reading color and "PDF" and "XPS" of the choices of the file format are selection-enabled input elements. On the other hand, "color" of the choices of the reading color and "JPEG" of the choices of the file format are selection-disabled input elements.

If the Web browser 400 determines in step S1601 that the dummy is a selection-enabled element, the process advances to step S1602; otherwise, the processing ends. In step S1602, the Web browser 400 applies a style which is defined in the input element CSS 820 and represents an appearance of a selected state to the dummy.

In case of the input element CSS 820 shown in Fig. 10, a property of an attribute selector "input[type=select]:selected" is applied to the choice of the select box in the selected state. As a result of the processing of step S1602, the dummy becomes an element which represents the choice of the select box in the selected state. Next, the process advances to step S1603, and the Web browser 400 sets a value in the input element corresponding to the dummy.

In case of the scan setting screen 600 shown in Fig. 11, for example, when the file format "PDF" is selected, the Web browser 400 sets "pdf" in "value" of the radio button "PDF" in the scan setting screen HTML 800. Then, the Web browser 400 sets "selected" in a "selected" attribute of the radio button "PDF", thus ending the processing.

As a result, upon pressing the scan start button of the scan setting screen 600, the Web browser 400 can send an HTTP request message including information format = "pdf" shown in Fig. 12 to the Web application 510.

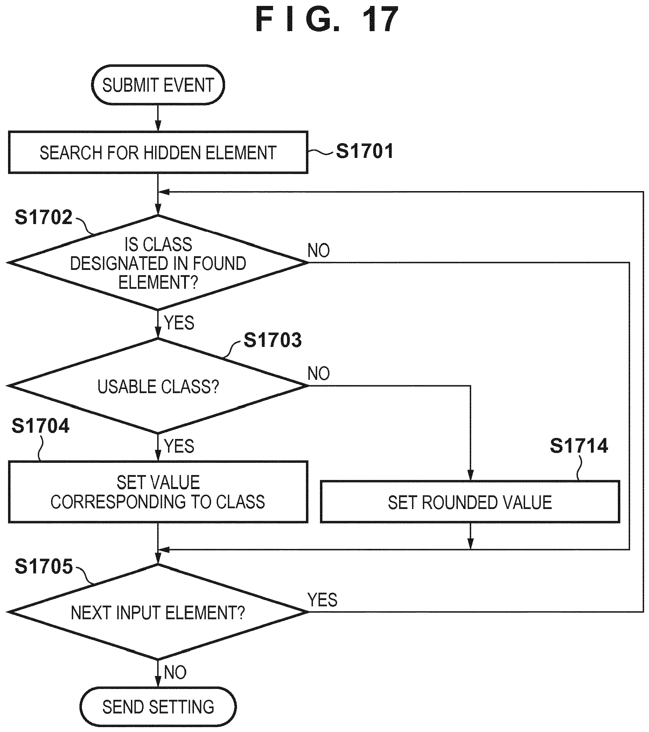

Fig. 17 is a flowchart for explaining processing until the Web browser 400 of the MFP 101 according to the first embodiment sends the scan settings to the Web application 510 upon pressing of the scan start button 612 in the scan setting screen 600. This processing is started when the scan setting form 840 in the scan setting screen 600 is submitted.

In step S1701, the Web browser 400 searches the scan setting screen 600 for hidden elements. The process then advances to step S1702, and the Web browser 400 determines whether or not a hidden element of interest found in step S1701 is designated with the scan setting class.

In case of the scan setting screen HTML 800 shown in Fig. 8, such element corresponds to a "hidden" element having a class attribute set with "Scan-dpi-600". If the Web browser 400 determines in step S1702 that the scan setting class is designated, the process advances to step S1703. On the other and, if the Web browser 400 determines that no scan setting class is designated, the process jumps to step S1705. The Web browser 400 determines in step S1703 whether or not the scan setting class designated for the hidden element is usable. If the Web browser 400 determines in step S1703 that the scan setting class is a usable class, the process advances to step S1704; otherwise, the process advances to step S1714. In step S1704, the Web browser 400 sets a value corresponding to the scan setting class in the hidden element, and the process advances to step S1705. For example, since the "Scan-dpi-600" class indicates that an original document is read at a resolution of 600 dpi, when the scanner 221 can read an image at the resolution of 600 dpi, the Web browser 400 sets "600 dpi" in the value of the hidden element.

On the other hand, in step S1714, the Web browser 400 sets a value obtained by rounding the value corresponding to the scan setting class in the hidden element, and the process advances to step S1705. For example, when the scanner 221 cannot read an image at the resolution of 600 dpi, but can read an image at 300 dpi, the Web browser 400 sets "300 dpi" in the value of the hidden element.

Then, the Web browser 400 determines in step S1705 whether or not the scan setting screen 600 includes the next hidden element. If the Web browser 400 determines that the next hidden element is included, the process returns to step S1702. On the other hand, if the Web browser 400 determines that no next hidden element is included, it sends the setting value of the scan setting form 840 to the Web application 510, thus ending the processing.

As described above, according to the first embodiment, the Web browser 400 of the MFP 101 determines the capability of the MFP 101, and appropriately changes a setting value to be sent to the Web application 510. As a result, when the Web application 510 issues a job control request to the job control unit 430, the job control never fails due to mismatch of the capability of the MFP 101.

### [Illustrative example]

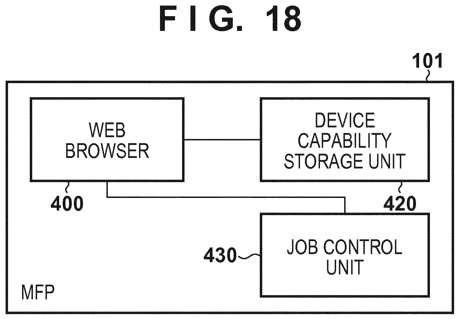

An illustrative example will be described below. A difference from the first embodiment lies in that a Web browser 400 implements device capability acquisition and job control by processing a JavaScript described in a scan setting screen HTML 800. The difference from the first embodiment will be described below with reference to Figs. 18 to 20.

Fig. 18 is a block diagram showing the software arrangement of an MFP 101 according to the second embodiment of the present invention. In Fig. 18, the same reference numerals denote units common to the first embodiment.

A difference from the software arrangement of the MFP 101 according to the first embodiment lies in that the MFP 101 does not include any HTTP server 410. In this illustrative example, the Web browser 400 directly controls a device capability storage unit 420 and job control unit 430. The device capability storage unit 420 and job control unit 430 do not receive an HTTP request assigned from the HTTP server 410, and do not respond any HTTP response.

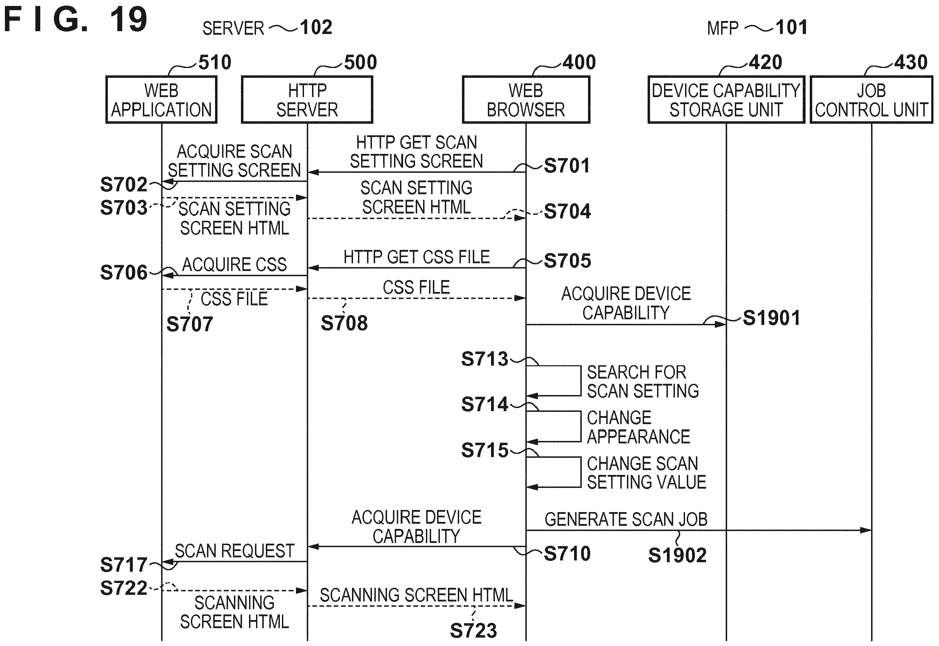

Fig. 19 is a chart for explaining the processing sequence to be executed by an information processing system according to the example. Differences from the first embodiment are processes of steps S1901 and S1902. The same step numbers denote processes common to those shown in Fig. 7 of the first embodiment, and a description thereof will not be repeated.

As shown in Fig. 7, in steps S709 to S712 of the first embodiment, the Web browser 400 sends an HTTP request to the HTTP server 410 to acquire a scan capability applying JavaScript 830 generated by the device capability storage unit 420. Then, the Web browser 400 processes the scan capability applying JavaScript 830, thereby executing the processes of steps S713 to S715.

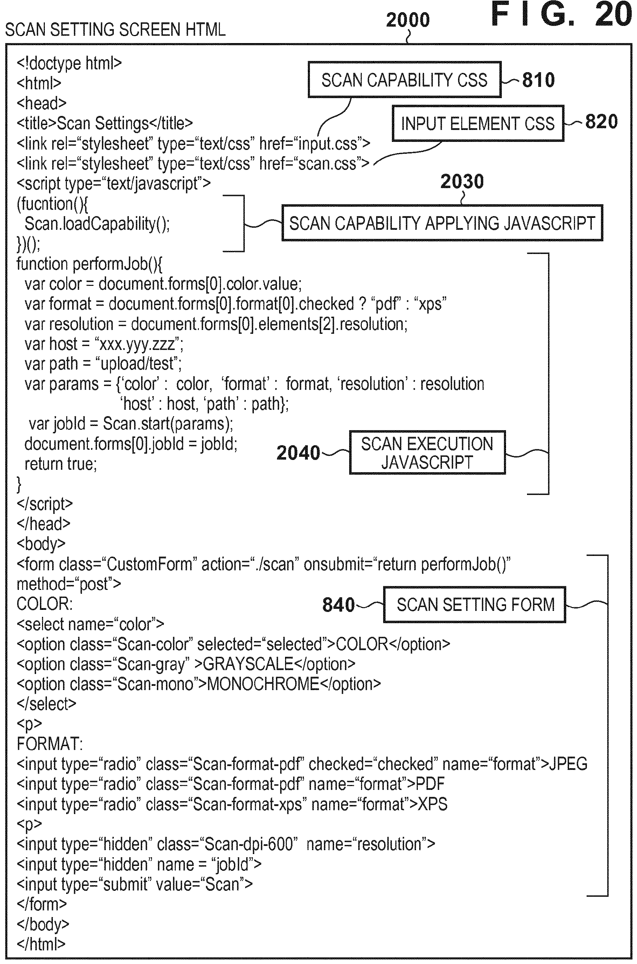

On the other hand, in step S1901 of the second embodiment, the Web browser 400 processes a JavaScript described in a scan setting screen HTML 2000 shown in Fig. 20. Thus, the Web browser 400 acquires a scan capability from the device capability storage unit 420, and executes the processes of steps S713 to S715.

In steps S716 to S723 of the first embodiment, a Web application 510 sends a SOAP request to the HTTP server 410 to request the job control unit 430 to generate a scan job.

By contrast, in step S1902 of the second embodiment, the Web browser 400 processes a JavaScript described in the scan setting screen HTML 2000, thus requesting the job control unit 430 to generate a scan job.

Fig. 20 shows an example of the scan setting screen HTML 2000 according to the example. A difference from the first embodiment lies in a scan capability applying JavaScript 2030 and scan execution JavaScript 2040.

In Fig. 8 of the first embodiment, the scan capability applying JavaScript 830 describes script tags which refer to external files on the HTTP server 410.

By contrast, in Fig. 20 of the example, the scan capability applying JavaScript 2030 describes a JavaScript so as to change input elements designated with scan setting classes according to the scan capability acquired from the device capability storage unit 420.

The scan execution JavaScript 2040 of the second embodiment sets, as scan settings, reading colors, generation formats, and reading resolutions set in the scan setting form 840. Then, a JavaScript which requests the job control unit 430 to generate a job is described based on these scan settings.

### (Other Embodiments)

In the first embodiment and example, when a scan setting class is designated in a class attribute of each input item of the scan setting screen 600, the Web browser 400 determines that the corresponding input item is a scan setting item. However, the present invention is not limited to this. By identifying another attribute of the input item, for example, an ID designated in an ID attribute, a scan setting item may be determined. Also, attribute designations of input items of the scan setting screen 600 may be described using a JavaScript in place of HTML.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments.

## Claims

1. An image processing apparatus (101) comprising:
display means (219);
a web browser (400) for displaying an operation screen (600) to accept a setting for a job from a user on the display means (219);
job control means (430) for executing a job on the image processing apparatus (101);
storage means (420) for storing capability information indicating a job processing capability of said image processing apparatus (101);
a HTTP server (410) for receiving an HTTP request from the web browser (400) and sending to the web browser (400) an HTTP response including a script for rewriting an operation screen (600) in accordance with the job processing capability, the script for rewriting the operation screen (600) being generated by the storage means (420) and being received by the HTTP server (410) from the storage means (420);
wherein the web browser (400) receives (S704) from an external server (102) an HTTP response including HTML data of the operation screen (600) in response to a user input instruction, receives (S712) from the HTTP server (410) the script for rewriting the operation screen (600) received in the HTTP response in response to an HTTP request for the job processing capability of said image processing apparatus, processes (S713, S714) the script for rewriting the operation screen (600) received in the HTTP response in accordance with the job processing capability to change whether or not to allow input or selection of an input element on the operation screen (600) received in the HTTP response, and displays the rewritten operation screen (600) obtained as a result of said script processing.

2. An image processing apparatus according to claim 1, wherein the job is a scan job for generating image data by reading an original document.

3. An image processing apparatus according to claim 2, wherein the input element is related to a color setting in the image reading.

4. An image processing apparatus according to claim 2 or claim 3, wherein the input element is related to a format of a file to be generated by the reading.

5. An image processing apparatus according to any preceding claim, wherein said web browser receives a plurality of candidates of settings selectable by the user, and
said display means displays the operation screen which includes settings which said image processing apparatus can process and does not include settings which said image processing apparatus cannot process.

6. An image processing apparatus according to any preceding claim, wherein the external server comprises a Web server.

7. An image processing apparatus according to any preceding claim, further comprising:
notification means for notifying the external server of a setting accepted via the operation screen; and
wherein the job control means executes a job according to a request from the server in accordance with the contents notified by said notification means.

8. A control method of an image processing apparatus (101) having job control means (430) for executing a job on the image processing apparatus (101), comprising:
by a web browser (400) of the image processing apparatus (101) for displaying an operation screen (600) to accept a setting for a job from a user, receiving (S704) from an external server (102) an HTTP response including HTML data of the operation screen (600) in response to a user input instruction;
by the HTTP server (410), sending (S712) an HTTP response including a script for rewriting the operation screen (600) received in the HTTP response in accordance with a job processing capability of the image processing apparatus (101), wherein storage means (420) of the image processing apparatus (101) stores capability information indicating a job processing capability of the image processing apparatus (101), the script for rewriting the operation screen (600) being generated by the storage means (420) and being received by the HTTP server (410) from the storage means (420);
by the Web browser (400), processing (S713, S714) the script for rewriting the operation screen (600) received in the HTTP response in accordance with the job processing capability to change whether or not to allow input or selection of an input element on the operation screen (600) received in the HTTP response; and
by the Web browser (400), displaying the rewritten operation screen (600), obtained as a result of said script processing, on display means (219) of the image processing apparatus (101).

9. A computer program that, when executed by an image processing apparatus, causes the image processing apparatus to perform a method according to claim 8.

## Patentansprüche

1. Bildverarbeitungsvorrichtung (101), umfassend:
eine Anzeigeeinrichtung (219),
einen Webbrowser (400) zum Anzeigen eines Bedienbildschirms (600) zum Annehmen einer Einstellung für einen Auftrag von einem Benutzer auf der Anzeigeeinrichtung (219),
eine Auftragssteuerungseinrichtung (430) zum Ausführen eines Auftrags auf der Bildverarbeitungsvorrichtung (101),
eine Speichereinrichtung (420) zum Speichern von Fähigkeitsinformation, die eine Auftragsverarbeitungsfähigkeit der Bildverarbeitungsvorrichtung (101) angibt,
einen HTTP-Server (410) zum Empfangen einer HTTP-Anfrage vom Webbrowser (400) und zum Senden einer HTTP-Antwort an den Webbrowser (400), welche ein Skript zum Neuschreiben eines Bedienbildschirms (600) entsprechend der Auftragsverarbeitungsfähigkeit umfasst, wobei das Skript zum Neuschreiben des Bedienbildschirms (600) durch die Speichereinrichtung (420) erzeugt wird und durch den HTTP-Server (410) von der Speichereinrichtung (420) empfangen wird;
wobei der Webbrowser (400) ansprechend auf eine Benutzereingabeanweisung eine HTTP-Antwort einschließlich HTML-Daten des Bedienbildschirms (600) von einem externen Server (102) empfängt (S704), ansprechend auf eine HTTP-Anfrage nach der Auftragsverarbeitungsfähigkeit der Bildverarbeitungsvorrichtung das in der HTTP-Antwort empfangene Skript zum Neuschreiben des Bedienbildschirms (600) vom HTTP-Server (410) empfängt (S712), das in der HTTP-Antwort empfangene Skript zum Neuschreiben des Verarbeitungsbildschirms (600) entsprechend der Auftragsverarbeitungsfähigkeit verarbeitet (S713, S714), um zu ändern, ob Eingabe oder Auswahl eines Eingabeelements auf dem in der HTTP-Antwort empfangenen Bedienbildschirm (600) gestattet werden sollen oder nicht, und den als ein Ergebnis der Verarbeitung des Skripts erhaltenen neu geschriebenen Bedienbildschirm (600) anzeigt.

2. Bilderfassungsvorrichtung nach Anspruch 1, wobei der Auftrag ein Scanauftrag zum Erzeugen von Bilddaten durch Lesen eines Originaldokuments ist.

3. Bildverarbeitungsvorrichtung nach Anspruch 2, wobei beim Bildlesen das Eingabeelement mit einer Farbeinstellung verbunden ist.

4. Bildverarbeitungsvorrichtung nach Anspruch 2 oder Anspruch 3, wobei das Eingabeelement mit einem Format einer durch das Lesen zu erzeugenden Datei verbunden ist.

5. Bildverarbeitungsvorrichtung nach einem der vorhergehenden Ansprüche, wobei
der Webbrowser mehrere Kandidaten für Einstellungen erhält, die der Benutzer auswählen kann, und
die Anzeigeeinrichtung den Bedienbildschirm anzeigt, der Einstellungen enthält, welche die Bildverarbeitungsvorrichtung verarbeiten kann, und keine Einstellungen enthält, welche die Bildverarbeitungsvorrichtung nicht verarbeiten kann.

6. Bildverarbeitungsvorrichtung nach einem der vorhergehenden Ansprüche, wobei der externe Server einen Webserver umfasst.

7. Bildverarbeitungsvorrichtung nach einem der vorhergehenden Ansprüche, weiterhin umfassend:
eine Mitteilungseinrichtung zum Mitteilen einer über den Bedienbildschirm angenommenen Einstellung an den externen Server; und
wobei die Auftragssteuerungseinrichtung einen Auftrag gemäß einer Anfrage vom Server entsprechend den durch die Mitteilungseinrichtung mitgeteilten Inhalten ausführt.

8. Steuerverfahren einer Bildverarbeitungsvorrichtung (101) mit einer Auftragssteuerungseinrichtung (430) zum Ausführen eines Auftrags auf der Bildverarbeitungsvorrichtung (101), umfassend:
Empfangen (S704) einer HTTP-Antwort einschließlich HTML-Daten des Bedienbildschirms (600) von einem externen Server ansprechend auf eine Benutzereingabeanweisung, und zwar durch einen Webbrowser (400) der Bildverarbeitungsvorrichtung (101) zum Anzeigen eines Bedienbildschirms (600) zum Annehmen einer Einstellung für einen Auftrag von einem Benutzer;
Senden (S712) einer HTTP-Antwort einschließlich eines in der HTTP-Antwort empfangenen Skripts zum Neuschreiben des Bedienbildschirms (600) entsprechend einer Auftragsverarbeitungsfähigkeit der Bildverarbeitungsvorrichtung (101) durch den HTTP-Server (410), wobei eine Speichereinrichtung (420) der Bildverarbeitungsvorrichtung (101) Fähigkeitsinformation speichert, die eine Auftragsverarbeitungsfähigkeit der Bildverarbeitungsvorrichtung (101) angibt, wobei das Skript zum Neuschreiben des Bedienbildschirms (600) durch die Speichereinrichtung (420) erzeugt wird und durch den HTTP-Server (410) von der Speichereinrichtung (420) empfangen wird,
Verarbeiten (S713, S714) des Skripts zum Neuschreiben des in der HTTP-Antwort empfangenen Bedienbildschirms (600) durch den Webbrowser (400) entsprechend der Auftragsverarbeitungsfähigkeit, um zu ändern, ob Eingabe oder Auswahl eines Eingabeelements auf dem in der HTTP-Antwort empfangenen Bedienbildschirm (600) erlaubt werden sollen oder nicht; und
Anzeigen des neu geschriebenen Bedienbildschirms (600), der als Ergebnis der Skriptverarbeitung erhalten wurde, durch den Webbrowser (400) auf einer Anzeigeeinrichtung (219) der Bildverarbeitungsvorrichtung (101) .

9. Computerprogramm, das bei Ausführen durch eine Bildverarbeitungsvorrichtung die Bildverarbeitungsvorrichtung veranlasst, ein Verfahren nach Anspruch 8 durchzuführen.

## Revendications

1. Appareil de traitement d'image (101) comprenant :
un moyen d'affichage (219) ;
un navigateur Web (400) destiné à afficher un écran d'exploitation (600) pour accepter une définition d'une tâche d'un utilisateur sur le moyen d'affichage (219) ;
un moyen de commande de tâche (430) destiné à exécuter une tâche sur l'appareil de traitement d'image (101) ;
un moyen de mémorisation (420) destiné à mémoriser des informations de capacité indiquant une capacité de traitement de tâche dudit appareil de traitement d'image (101) ;
un serveur HTTP (410) destiné à recevoir une demande HTTP du navigateur Web (400) et à envoyer au navigateur Web (400) une réponse HTTP comprenant un script pour réécriture d'un écran d'exploitation (600) conformément à la capacité de traitement de tâche, le script pour réécriture de l'écran d'exploitation (600) étant généré par le moyen de mémorisation (420) et étant reçu par le serveur HTTP (410) en provenance du moyen de mémorisation (420) ;
dans lequel le navigateur Web (400) reçoit (S704), d'un serveur externe (102), une réponse HTTP comprenant des données HTML de l'écran d'exploitation (600) en réponse à une instruction d'entrée d'utilisateur, reçoit (S712), du serveur HTTP (410), le script pour réécriture de l'écran d'exploitation (600) reçu dans la réponse HTTP en réponse à une demande HTTP concernant la capacité de traitement de tâche dudit appareil de traitement d'image,
traite (S713, S714) le script pour réécriture de l'écran d'exploitation (600) reçu dans la réponse HTTP conformément à la capacité de traitement de tâche pour modifier s'il convient, ou non, de permettre une entrée ou une sélection d'un élément d'entrée sur l'écran d'exploitation (600) reçu dans la réponse HTTP, et affiche l'écran d'exploitation ayant fait l'objet d'une réécriture (600) obtenu en tant que résultat dudit traitement de script.

2. Appareil de traitement d'image selon la revendication 1, dans lequel la tâche est une tâche de balayage destinée à générer des données d'image par une lecture d'un document d'origine.

3. Appareil de traitement d'image selon la revendication 2, dans lequel l'élément d'entrée est associé à une définition de couleurs de la lecture d'image.

4. Appareil de traitement d'image selon la revendication 2 ou la revendication 3, dans lequel l'élément d'entrée est associé à un format d'un fichier à générer par la lecture.

5. Appareil de traitement d'image selon l'une quelconque des revendications précédentes, dans lequel ledit navigateur Web reçoit une pluralité de candidats de définitions pouvant être sélectionnés par l'utilisateur, et
ledit moyen d'affichage affiche l'écran d'exploitation qui comprend des définitions que ledit appareil de traitement d'image peut traiter et ne comprend pas de définition que ledit appareil de traitement d'image ne peut pas traiter.

6. Appareil de traitement d'image selon l'une quelconque des revendications précédentes, dans lequel le serveur externe comprend un serveur Web.

7. Appareil de traitement d'image selon l'une quelconque des revendications précédentes, comprenant en outre :
un moyen de notification destiné à notifier au serveur externe une définition acceptée par le biais de l'écran d'exploitation ; et
dans lequel le moyen de commande de tâche exécute une tâche conformément à une demande provenant du serveur conformément aux contenus notifiés par ledit moyen de notification.

8. Procédé de commande d'un appareil de traitement d'image (101) comportant un moyen de commande de tâche (430) destiné à exécuter une tâche sur l'appareil de traitement d'image (101), comprenant les étapes consistant à :
par un navigateur Web (400) de l'appareil de traitement d'image (101) destiné à afficher un écran d'exploitation (600) pour accepter une définition d'une tâche d'un utilisateur, recevoir (S704), d'un serveur externe (102), une réponse HTTP comprenant des données HTML de l'écran d'exploitation (600) en réponse à une instruction d'entrée d'utilisateur ;
par le serveur HTTP (410), envoyer (S712) une réponse HTTP comprenant un script pour réécriture de l'écran d'exploitation (600) reçu dans la réponse HTTP conformément à une capacité de traitement de tâche de l'appareil de traitement d'image (101), où un moyen de mémorisation (420) de l'appareil de traitement d'image (101) mémorise des informations de capacité indiquant une capacité de traitement de tâche de l'appareil de traitement d'image (101), le script pour réécriture de l'écran d'exploitation (600) étant généré par le moyen de mémorisation (420) et étant reçu par le serveur HTTP (410) en provenance du moyen de mémorisation (420) ;
par le navigateur Web (400), traiter (S713, S714) le script pour réécriture de l'écran d'exploitation (600) reçu dans la réponse HTTP conformément à la capacité de traitement de tâche pour modifier s'il convient, ou non, de permettre une entrée ou une sélection d'un élément d'entrée sur l'écran d'exploitation (600) reçu dans la réponse HTTP ; et
par le navigateur Web (400), afficher l'écran d'exploitation ayant fait l'objet d'une réécriture (600), obtenu comme résultat dudit traitement de script, sur un moyen d'affichage (219) de l'appareil de traitement d'image (101).

9. Programme informatique qui, lorsqu'il est exécuté par un appareil de traitement d'image, amène l'appareil de traitement d'image à mettre en œuvre un procédé selon la revendication 8.
